(19) Europäisches Patentamt
European Patent Office
Office européen des brevets

(11) **EP 2 930 805 B1**

## (12) EUROPÄISCHE PATENTSCHRIFT

(45) Veröffentlichungstag und Bekanntmachung des Hinweises auf die Patenterteilung:
**27.04.2016  Patentblatt 2016/17**

(51) Int Cl.:
*H02G 1/12* (2006.01)    *H01R 43/28* (2006.01)
*H05K 13/00* (2006.01)

(21) Anmeldenummer: **15162813.8**

(22) Anmeldetag: **08.04.2015**

(54) **VERFAHREN, VORRICHTUNG UND SYSTEM ZUM BESTIMMEN EINER WINKELLAGE VON EINZELLEITUNGEN AN EINER VORBESTIMMTEN QUERSCHNITTSSTELLE IN EINER MEHRADRIGEN MANTELLEITUNG**

METHOD, DEVICE AND SYSTEM FOR DETERMINING THE ANGULAR POSITION OF INDIVIDUAL WIRES WITHIN A SHEATHED CABLE CONTAINING TWISTED WIRES

PROCÉDÉ, DISPOSITIF ET SYSTÈME DE DÉTERMINATION D'UNE POSITION ANGULAIRE DE CONDUCTEURS INDIVIDUELS SUR UN POINT DE SECTION TRANSVERSALE DANS UN CONDUCTEUR SOUS GAINE À PLUSIEURS FILS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2014  DE 102014005242**

(43) Veröffentlichungstag der Anmeldung:
**14.10.2015  Patentblatt 2015/42**

(73) Patentinhaber: **SLE quality engineering GmbH & Co. KG**
**94481 Grafenau (DE)**

(72) Erfinder: **Frey, Werner**
**94481 Grafenau (DE)**

(74) Vertreter: **Kramer Barske Schmidtchen**
**Patentanwälte PartG mbB**
**European Patent Attorneys**
**Landsberger Strasse 300**
**80687 München (DE)**

(56) Entgegenhaltungen:
**EP-A2- 0 368 073     EP-B1- 0 600 415**
**DE-A1- 3 144 281**

**Beschreibung**

Die Erfindung betrifft ein Verfahren zum Bestimmen einer Winkellage von Einzelleitungen an einer vorbestimmten Querschnittsstelle in einer mehradrigen Mantelleitung. Die Erfindung betrifft weiter eine Vorrichtung zum Durchführen des Verfahrens.

Bei der Verarbeitung mehradriger Mantelleitungen kann es vorteilhaft sein, die Orientierung bzw. Winkellage bzw. Position der Einzelleitungen im noch vorhandenen Mantel an einer bestimmten Stelle der Längsrichtung der Mantelleitung zu wissen. Dieses Wissen der Winkellage der Einzelleitungen kann beispielsweise beim präzisen Abisolieren mittels Formmessern, beim Zwischen-Ausisolieren, beim Entfernen beilaufender Waren oder Folie, beim Orientieren einer Einzelleitung oder einer Einzelleitergruppe in einer Maschine usw. vorteilhaft sein.

Aus der DE 31 44 281 A1 ist bekannt, zur Vorbereitung der Anschlussenden der Einzelleitungen einer Mantelleitung den Mantel zunächst abzuisolieren und die aus dem Mantel dann herausragenden Einzelleitungsenden bei einer Drehung der Mantelleitung mechanisch abzutasten und eine vorgegebene Drehstellung beizubehalten. Mindestens eines der noch mit einer farbigen Isolierung versehenden Einzelleitungsenden wird anschließend von einem optischen Tastkopf erfasst, um die Farbe bzw. die Helligkeit der Isolierung zu prüfen. Der Vorgang wird wiederholt, bis sich der farblich besonders gekennzeichnete Schutzleiter in einer vorgegebenen Stellung befindet.

In der EP 0 600 415 B1 ist eine Vorrichtung zum Anpressen einer Kabelendklemme an eine Mantelleitung bekannt, die an ihrer Außenseite in ihrer Längsrichtung aufgedruckte Unterscheidungsmerkmale trägt. Die Mantelleitung wird vor dem Anpressen der Kabelendklemme durch eine Dreheinrichtung hindurchgeführt und dort solange gedreht, bis sich die Unterscheidungsmerkmale in einer vorbestimmten Orientierung befinden. Dazu ist an der Dreheinrichtung ein optischer Sensor angeordnet, der während der Drehung der Mantelleitung die Unterscheidungsmerkmale erfasst und mit Hilfe dessen die Drehung beendet wird, wenn sich die Unterscheidungsmerkmale in der vorbestimmten Orientierung bzw. Winkellage befinden.

Aus der EP 0 368 073 A2 ist ein Verfahren zum Ausrichten von aus dem Mantel einer Mantelleitung vorstehenden, mit Isolierungen versehenen Einzelleitungen bekannt, bei dem die Farbe der Isolierung wenigstens einer der Einzelleitungen erfasst wird und die Mantelleitung dann um ihre Längsrichtung gedreht wird, bis die Einzelleitungen eine vorbestimmte Drehwinkellage einnehmen.

Der Erfindung liegt die Aufgabe zugrunde, ein Verfahren und eine Vorrichtung zu dessen Durchführung und ein System zu schaffen, mit dem bzw. der es möglich ist, die Winkellage von Einzelleitungen einer mehradrigen Mantelleitung an einem vorbestimmten Querschnitt in Längsrichtung der Mantelleitung zu bestimmen oder festzulegen, ohne dass die Einzelleitungen an der vorbestimmten Stelle freigelegt werden müssen.

Der das Verfahren betreffende Teil der Erfindungsaufgabe wird mit einem Verfahren gemäß dem Anspruch 1 oder dem Anspruch 2 gelöst. Die Unteransprüche 3 bis 7 sind auf vorteilhafte Durchführungsformen des erfindungsgemäßen Verfahrens gerichtet.

Der die Vorrichtung betreffende Teil der Erfindungsaufgabe wird mit den Merkmalen des Anspruchs 8 oder 9 gelöst.

Die Ansprüche 10 bis 14 sind auf vorteilhafte Ausführungsformen der erfindungsgemäßen Vorrichtung gerichtet.

Ein vorteilhaftes System ist in Anspruch 15 angegeben.

Die Erfindung, die für viele Arten von mehradrigen Mantelleitungen verwendet werden kann, die innerhalb ihres Mantels mehrere mit einer vorbestimmten Schlaglänge gegeneinander verdrillte Einzelleitungen enthalten, wird im Folgenden anhand schematischer Zeichnungen beispielsweise und mit weiteren Einzelheiten erläutert.

Es stellen dar:

Fig. 1    schematisierte Ansichten einer erfindungsgemäßen Vorrichtung in einzelnen Verfahrungsstufen und

Fig. 2    eine Querschnittsansicht einer Mantelleitung.

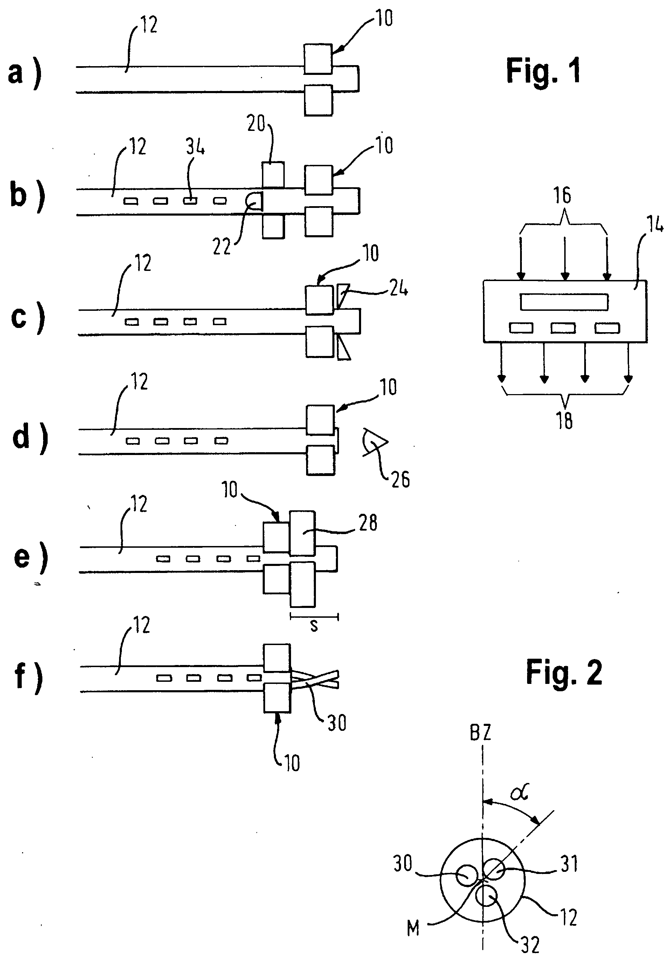

Fig. 1 zeigt, wie eine Halterung 10 zum Halten einer mehradrigen Mantelleitung 12 in verschiedenen Verfahrensschritten a) bis f) eingesetzt wird, in denen unterschiedliche in der erfindungsgemäßen Vorrichtung vorhandene Zusatzeinrichtungen tätig werden. Die mehradrige Mantelleitung 12 weist innerhalb eines (Isolier-)Mantels mehrere mit einer vorbestimmten Schlaglänge gegeneinander verdrillte Einzelleitungen 30, 31, 32 auf. Die Drillrichtung kann im Uhrzeigersinn oder gegenläufig verlaufen, je nachdem von welchem Ende (Punkt) die Mantelleitung 12 betrachtet wird. Zur Steuerung der Vorrichtung dient ein elektronisches Steuergerät 14 mit Eingängen 16 und Ausgängen 18, das, wie im Folgenden erläutert wird, mit Elementen der erfindungsgemäßen Vorrichtung verbunden ist und in an sich bekannter Weise Speicher zum Eingeben von Daten und Programmspeicher mit darin abgelegten Programmen enthält.

Von der Halterung 10, die in ihrem Aufbau an sich bekannt ist, sind nur Haltebacken dargestellt, mit denen eine durch sie hindurchgeführte Mantelleitung 12 drehfest und in Längsrichtung der Mantelleitung 12 unverschiebbar haltbar ist. Die Haltebacken werden von einer nicht dargestellten Betätigungseinrichtung gesteuert.

Im Figurenteil b) sind zusätzlich zur Halterung 10 eine Dreheinrichtung 20 und eine optische Aufnahmeeinrichtung 22 vorhanden. Die Dreheinrichtung 20 enthält beispielsweise drei drehantreibbare Walzen, die längs des Umfangs der Mantelleitung 12 an dieser anliegen. Der Aufbau einer solchen Dreheinrichtung ist an sich bekannt. Die Drehwalzen können radial in Anlage an die Außenfläche der Mantelleitung 12 heranbewegt werden und drehangetrieben werden. Die entsprechende Betätigungseinrichtung ist nicht dargestellt.

Die optische Aufnahmeeinrichtung 22 kann beispielsweise eine elektronische Kamera sein, die ein Bild eines Bereiches der Außenseite der Mantelleitung 12 erfasst.

Im Figurenteil c) ist zusätzlich zur Halterung 10 eine Schneideinrichtung 24 vorhanden, mit der die Mantelleitung 12 durchtrennbar ist. Solche Schneideinrichtungen sind an sich bekannt. Die Schneiden werden von einer nicht dargestellten Betätigungseinrichtung betätigt.

Im Figurenteil d) ist zusätzlich zur Halterung 10 eine elektronische Kamera 26 vorhanden, mit der eine Querschnittsansicht der Mantelleitung 12 enthaltende Bilddaten erzeugt werden können.

Im Figurenteil e) ist die Halterung 10 im Vergleich zu ihrer Stellung in den Figurenteilen a) bis d) um eine Strecke s relativ zur Mantelleitung 12 nach links bewegt. Die Relativbewegung zwischen der Halterung 10 und der Mantelleitung 12 kann dadurch erfolgen, dass die Halterung 10 in geöffnetem Zustand längs der Mantelleitung 12 gemäß Fig. 1 nach links bewegt wird oder die Mantelleitung 12 durch die Halterung 10 hindurch um die Strecke s nach rechts verschoben wird. Eine entsprechende Relativbewegungseinrichtung zum Ermöglichen der Relativbewegung zwischen Mantelleitung 12 und der Halterung 10 ist nicht gezeigt. Die Relativverschiebung s, die vorwählbar ist, wird von einer nicht dargestellten Wegmesseinrichtung erfasst. Zusätzlich zur Halterung 10 ist eine Abisoliervorrichtung 28 vorhanden, mit der der Mantel der Mantelleitung 12 entfernbar ist, so dass gemäß dem Figurenteil f) die Einzelleitungen 30, 31, 32 freiliegen.

Die Wegmesseinrichtung kann beispielsweise über eine auf dem Kabel abrollende Rolle, die mit einem Umdrehungssensor versehen ist, realisiert werden. Alternativ kann die Abstandsbestimmung beispielsweise per

- Messtaster,
- Optisches System, z.B. Lasertaster,
- Bildgebendes optisches System (Kamerasystem, etc.), und/oder
- Mitlaufende Wegmesssysteme

erfolgen.

Die Betätigungseinrichtungen für die Halterung 10, die Dreheinrichtung 20, die Schneideinrichtung 24 und die Abisoliereinrichtung 28 sowie die Relativbewegungseinrichtung zum Bewegen der Halterung 10 und der Mantelleitung 12 relativ zueinander um die am Steuergerät 14 vorwählbare Strecke s sind mit Ausgängen des Steuergerätes 14 verbunden. Die Aufnahmeeinrichtung 22 sowie die Kamera 26 und gegebenenfalls weitere Positionserfassungseinrichtungen und die Wegmesseinrichtung sind mit Eingängen 16 des Steuergerätes 14 verbunden.

Das erfindungsgemäße Verfahren wird im Folgenden anhand der vorstehend skizzierten Vorrichtung beispielhaft beschrieben. Dabei kann die Halterung 10 auf einer Transporteinrichtung angeordnet sein und zu verschiedenen Stationen einer Kabelbearbeitungsvorrichtung bewegt werden. Die zusätzlich zu der Halterung 10 vorhandenen Einrichtungen können auch zu der Halterung 10 transportiert werden oder neben dieser angeordnet sein, so dass die Halterung 10 ortsfest sein kann.

An die aus der Halterung 10 vorstehende Mantelleitung 12 wird auf der dem vorstehenden Ende gegenüberliegende Seite der Halterung 10 die Dreheinrichtung 20 und die Aufnahmeeinrichtung 22 herangefahren. Die Halterung 10 wird geöffnet und die Dreheinrichtung 20 wird in Betrieb gesetzt, so dass sich die Mantelleitung 12 um ihre Längsachse herum dreht. Dabei erfasst die optische Aufnahmeeinrichtung 22 die Oberfläche der Mantelleitung 12 und darauf angeordnete Markierungen 34. Sobald die Markierungen 34 erfasst sind, kann die Dreheinrichtung 20 außer Betrieb gesetzt werden. Die von der Aufnahmeeinrichtung 30 erfassten Markierungsdaten werden in dem Steuergerät 14 ausgewertet. Die Markierungsdaten können Informationen über die Verdrillung von in der Mantelleitung 12 enthaltenen Einzelleitungen 30, 31, 32 nämlich deren Drillrichtung (von links nach rechts, längs der Mantelleitung 12, gesehen in Uhrzeigerrichtung oder gegen Uhrzeigerrichtung) und/oder die Schlaglänge, das ist die in Längsrichtung der Mantelleitung 12 gemessene Strecke, nach der jeweils eine Verdrillung um 360° erfolgt ist, d.h. den Abstand zwischen zwei aufeinander folgenden Stellen gleicher Anordnung der Einzelleitungen 30, 31, 32. Die Bezugsrichtung kann sich beispielsweise aus der Ausrichtung der Markierungsdaten auf der Mantelleitung 12 ergeben. Somit kann die gewonnenen Information über die Verdrillung der Mantelleitung 12, in der Ausrichtung, wie sie in der Halterung 10 eingelegt ist, eindeutig zugeordnet und interpretiert werden.

Nach Auslesen der Markierung 34 bzw. Eingeben der Daten in das Steuergerät 14 wird gemäß dem Figurenteil c) die fest in der Halterung 10 aufgenommene Mantelleitung in der Schneideinrichtung 24 durchtrennt, so dass an einem definierten Ende (erste Position) der Mantelleitung 12 deren Querschnitt (Stirnseite) freiliegt und gemäß dem Figurenteil d) von einer elektronischen Kamera 26 erfasst werden kann.

In Fig. 2 ist eine Querschnittsansicht der Mantelleitung 12 dargestellt. Die beispielhafte Mantelleitung enthält drei um ihre Mitte M (Querschnittsmittelpunkt) in gleichen Winkelabständen von 120° herum angeordnete Einzelleitungen 30, 31, 32. Im dargestellten Beispiel ist die Winkellage (Endwinkellage) der rechten oberen Einzelleitung 31 relativ zu einer Bezugsrichtung senkrecht durch die Mitte M der Halterung 10 um den Winkel α (im dargestellten Beispiel etwa 45°) in Uhrzeigerrichtung verdreht. In dem Steuergerät 14 wird aus den von der Kamera 26 gelieferten Bilddaten mindestens der Winkel α ermittelt.

Wenn nun in einem Abstand s von dem freien Ende der Mantelleitung 12 (an einer zweiten Position) die Winkellage der Einzelleitungen 31 relativ zu der Bezugsrichtung BZ ermittelt werden soll, kann dies mit folgender Formel erfolgen:

$$\beta = \alpha + [(+/-)\ s \times 360°/S],$$

wobei S die Schlaglänge der Verdrillung ist und je nach Drillrichtung das Plus- oder Minuszeichen vor dem Abstand s gilt. β gibt somit die Winkellage der entsprechenden Einzelleitung 31 relativ zu der Bezugsrichtung BZ an der Stelle im Abstand s an.

Im Figurenteil e) ist die Mantelleitung 12 relativ zur Halterung 10 unter Beibehaltung der Winkellage der Mantelleitung relativ zur Halterung 10 um die Strecke s nach rechts verschoben, so dass die Winkellage der Einzelleitung 31 relativ zur Bezugsebene BZ an der Stelle rechts neben der Halterung 10, ab der der Mantel der Mantelleitung von der Abisoliereinrichtung 28 abisoliert wird, bekannt ist.

Wie eingangs erwähnt, ist es für verschiedenste Zwecke vorteilhaft, die Winkellage der Einzelleitungen an einer vorbestimmten Stelle der Mantelleitung zu kennen. Dazu muss lediglich gemäß dem Figurenteil d) an einem Ende der Mantelleitung 12, an dem der Querschnitt der Mantelleitung freiliegt, die Winkellage (Endwinkellage) der Einzelleitungen 30, 31, 32 ermittelt werden (Winkel α gemäß Fig. 2). Der Winkel β kann dann, wie vorstehend ausgeführt, für jede Stelle der Mantelleitung, die, in Längsrichtung der Mantelleitung gemessen, einen Abstand s von dem Ende hat, berechnet werden, wenn die Drillrichtung und die Schlaglänge der Verdrillung bekannt sind. Wie oben angegeben, werden die Drillrichtung und die Schlaglänge in der beschriebenen ersten Ausführungsform aus der Markierung 34 ermittelt.

Die Bestimmung der Endwinkellage erfolgt beispielsweise wie folgt:

a. Die Auswerteeinheit erhält mittels der Kamera bevorzugt kontinuierlich Bilddaten des Querschnitts am Leitungsende.
b. Aus den Bilddaten wird der gemittelte Aussendurchmesser der Matelleitung mit Hilfe von bekannten Bildverarbeitungsmethoden (beispielsweise (openCV) gefunden. Hieraus wird der Mittelpunkt der Mantelleitung bestimmt.
c. Innerhalb des Aussendurchmessers befinden sich die N unterschiedlichen (Einzel-) Leitungsenden (beispielsweise nach Farbe/Muster/Durchmesser unterscheidbar) der Innenleiter. Diese werden anhand einer geeigneten Bildverarbeitungsmethode (openCV) gefunden. Wie bei b.) kann optional aus dem Aussendurchmesser der jeweilige Mittelpunkt bestimmt werden.
d. Aus dem Mittelpunkt der Mantelleitung und einem oder mehreren Mittelpunkten der Innenleiter lässt sich in einem geeigneten Koordinatensystem die (Endwinkel-)Lage und Position der Innenleiter am (abgeschnittenen) Ende der Mantelleitung bestimmen.

Bevorzugt wird die Dreheinrichtung 20 weiter dazu verwendet, die Leitungsorientierung um die Kabelachse vor und/oder nach dem Erfassen der Endwinkellage zu verändern. So kann die Mantelleitung 12 beispielsweise direkt nach dem Einlegen der Mantelleitung 12 in die Halterung 10 in einem ersten Schritt rundgerichtet werden. Des Weiteren kann die Mantelleitung nach dem Durchtrennen mittels der Schneideeinrichtung 24 und während des Erfassens der Stirnfläche mittels der Kameravorrichtung so gedreht werden, dass eine gewünschte Position einer Einzelleitung in dem vorbestimmten Abstand s erreicht wird. Hierzu wird der Winkel β im Voraus berechnet und die Mantelleitung 12 durch die Dreheinrichtung 20 entsprechend ausgerichtet. Nach der Ausrichtung und dem festen Einspannen in der Halterung 10 erfolgt der Abisoliervorgang im Abstand s. Alternativ wird nicht die Mantelleitung 12 sondern die Abisoliereinrichtung 28 entsprechend gedreht.

Weiter (alternativ) kann die Vorrichtung derart ausgebildet sein, dass die Einzelleitungen an der vorbestimmten Stelle in Längsrichtung der Mantelleitung bezüglich der Abisoliereinrichtung 28 (oder einer anderen Einrichtung/Vorrichtung) in einer vorbestimmten Position angeordnet werden müssen, bevor der Abisolierprozess begonnen wird. Beispielsweise muss eine der Einzelleitungen mit einer gewünschten Winkellage (hier Winkel β) bezüglich der bezogen auf die Abisoliereinrichtung 28 und/oder Dreheinrichtung 20 ortsfesten Bezugsrichtung angeordnet sein. Um dies zu erreichen wird die gewünschten Winkellage der einen Einzelleitung im Vorhinein bestimmt/festgelegt und eine Soll-Endwinkellage (hier Winkel α) derselben Einzelleitung unter Verwendung der obigen Formel basierend auf (durch Eingeben) der gewünschten Winkellage, der Schlaglänge, der Drillrichtung und dem vorbestimmten Abstand s zu dem Ende der Mantelleitung errechnet. Die Soll-Endwinkellage (Winkel α) ist somit die Winkellage derselben Einzelleitung in der Querschnittsansicht an dem Ende der gemäß Fig. 1c) durchtrennten Mantelleitung, wenn dieselbe Einzelleitung in dem vorbestimmten Abstand zu dem Ende der Mantelleitung in der gewünschten Winkellage (Winkel β) angeordnet ist.

In einem nächsten Schritt wird nun die Mantelleitung mittels der Dreheinrichtung 20 solange gedreht, bis mittels der Kamera 26 und dem Steuergerät 14 (Auswerteeinrichtung) bestimmt wird, dass die tatsächliche (momentane) Endwinkellage mit der Soll-Endwinkellage übereinstimmt. Beispielsweise kann hierfür in der Auswerteeinrichtung 14 aus der berechneten Soll-Endwinkellage ein Soll-Bild erzeugt werden, welches mit dem oder mehreren der tatsächlichen, aktuellen Bilder der Querschnittsansicht des Endes der Mantelleitung, welche mittels der Kamera 26 aufgenommen werden, verglichen wird, solange bis bestimmt wird, dass das Soll-Bild mit dem aktuellen Bild übereinstimmt.

Alternativ zu dem genannten nächsten Schritt kann die Kamera 26 ein einzelnes Bild der Querschnittsansicht an dem Ende der Mantelleitung 12 aufnehmen und die Auswerteeinrichtung 14 die tatsächliche (momentane) Endwinkellage der Einzelleitung, die in dem vorbestimmten Abstand an der gewünschten Position angeordnet ist (sein soll) bzw. die gewünschte Winkellage aufweist (bzw. aufweisen soll), bestimmen. Anschließend berechnet die Auswerteeinrichtung 14 in diesem Fall einen Differenzwinkel zwischen der tatsächlichen Endwinkellage und der Soll-Endwinkellage derselben Einzelleitung und dreht die Mantelleitung 12 mittels der Dreheinrichtung 20 um den berechneten Differenzwinkel, so dass die tatsächliche Endwinkellage der Einzelleitung mit der Soll-Endwinkellage derselben übereinstimmt.

Weitere Abwandlungen, insbesondere in der Reihenfolge der beanspruchten Verfahrensschritte sind jederzeit möglich. So kann beispiesweise eine Bestimmung der gewünschten Winkellage erst nach einer Bestimmung der tatsächlichen Endwinkellage erfolgen.

Die Mechanisierung und Automatisierung der Vorrichtung kann je nach Bedarf unterschiedlich sein. Die Halterung 10 kann manuell betätigt werden. Die Verdrehung der Mantelleitung um ihre Längsachse kann ebenfalls von Hand erfolgen, wobei diese Verdrehung soweit erfolgt, dass die Markierung 34 von der mit dem Steuergerät 14 verbundenen Aufnahmeeinrichtung 22 erfasst und im Steuergerät elektronisch ausgewertet werden kann. Die Schneideinrichtung 24 kann ebenfalls von Hand betätigt sein. Es ist lediglich darauf zu achten, dass die Winkellage der Mantelleitung 12 insgesamt, d.h. deren Drehstellung relativ zu der Längsachse, erhalten bleibt, nachdem von der Kamera 26 ein Querschnittsbild aufgenommen wurde, so dass die Orientierung bzw. Winkellage der Einzelleitungen 30, 31, 32 relativ zu einer Bezugsrichtung BZ konstant bleibt, bis die Winkellage der Einzelleitungen 30, 31, 32 an einer vorbestimmten Stelle der Mantelleitung, die von der Stelle, an der das Querschnittsbild ermittelt wurde, mit dem vorbestimmten Abstand beabstandet ist, bestimmt ist.

Das Steuergerät 14 ist in dieser "abgespeckten" Version der Vorrichtung lediglich eine elektronische Auswertevorrichtung, in der die zu den erfassten Markierungsdaten gehörenden Werte der Schlaglänge und der Drillrichtung gespeichert sind. Der Winkel α zu einer vorbestimmten Bezugsrichtung kann auch unmittelbar zeichnerisch ausgewertet werden. Der Winkel β, den die eine der Einzelleitungen an der vorbestimmten Stelle der Mantelleitung mit der Bezugsrichtung hat, kann dann errechnet werden, wobei wichtig ist, dass die Bezugsrichtung bezogen auf eine Mantellinie der Mantelleitung unverändert bleibt.

Die Schlaglänge und die Drillrichtung müssen nicht elektronisch ermittelt werden, sondern können auch einer Tabelle entnommen werden, die die Bedeutung der Markierung 34 enthält. Die Schlaglänge und die Drillrichtung können auch manuell in das Steuergerät 14 eingegeben werden.

Das Auslesen der Markierung 34 zur Gewinnung der Information über die Verdrillung und der Ausrichtung der Mantelleitung kann auch zu einem anderen, beliebigen Zeitpunkt vor dem Berechnen des Winkels β erfolgen.

Alternativ zur Bestimmung der Endwinkellage zur Bestimmung des Winkels α kann eine Bestimmung einer Winkellage bzw. eines Winkels α alternativ auch an einer beliebigen ersten Position in Längsrichtung der abisolierten Mantelleitung 12 erfolgen und ist nicht auf die dargestellte Bestimmung der Endwinkellage an einem definierten Ende der Mantelleitung 12 beschränkt. Ausgehend von der Winkellage an dieser ersten Position kann die Winkelposition an einer zweiten Position, die einen Abstand aufweist, berechnet werden. Des Weiteren kann die Mantelleitung auch einen entsprechenden Markierungspunkt aufweisen, an dem die Winkellage der Einzelleitungen 30, 31, 32 vorbestimmt bzw. bekannt ist, so dass eine entsprechende Berechnung der Winkellage an einer beliebigen anderen Position ausgehend von dem Markierungspunkt erfolgen kann.

Die Markierungsdaten können weitere Informationen über die genaue geometrische Anordnung der Einzelleitungen 30, 31, 32 in der Mantelleitung enthalten. D.h., die Markierungsdaten können beispielsweise Informationen darüber enthalten, in welchem Radialabstand vom Mittelpunkt in der Querschnittsfläche die jeweiligen Leitungen geführt sind, welche Isolationsdicken bei den Einzelleitungen verwendet werden usw. Die weiteren Informationen können auch aus Bilddaten an der ersten Position errechnet werden. Aufgrund dieser weiteren Information kann somit nicht nur die Winkellage der Einzelleitungen relativ zu der Bezugsrichtung ermittelt werden, sondern können die jeweiligen Raumkoordinaten der einzelnen Einzelleitungen innerhalb der Mantelleitung genau bestimmt werden.

Gemäß einer weiteren bevorzugten Ausführungsform wird die Drillrichtung aus einer Querschnittsansicht bzw. einer Ausgestaltung der Querschnittsansicht der Mantelleitung bestimmt. In dieser Ausführungsform kommen nur Mantelleitungen zum Einsatz, bei denen aufgrund einer Ausgestaltung der Querschnittsansicht eindeutig die Richtung der Mantelleitung und damit die Drillrichtung bestimmt werden kann. Bei einer solchen Mantelleitung muss sich die Querschnittsansicht der Mantelleitung in einer Richtung der Mantelleitung von einer (bevorzugt derselben) Querschnittsansicht in die andere Richtung der Mantelleitung unterscheiden. Als Unterscheidungsmerkmale können individuelle Merkmale der Mantelleitung mit den Einzelleitungen herangezogen werden. Mindestens für eine Drillrichtung (bzw. Richtung der Querschnittsansicht) ist die Ansicht der individuellen Merkmale, beispielsweise die relative Anordnung der Einzelleitungen 30, 31, 32 zueinander und/oder bezüglich des Mantelleiters 12 und/oder individueller Merkmale der Einzelleitungen bekannt und beispielsweise in einem Datenblatt der Mantelleitung festgehalten und/oder in dem Steuergerät gespeichert. Beispielweise weist eine solche Mantelleitung 12 drei Einzelleitungen 30, 31, 32 auf und ist bekannt, dass wenn die erste Einzelleitung 30, die zweite Einzelleitung 31 und die dritte Einzelleitung 32 in dieser Reihenfolge im Uhrzeigersinn um die Längsachse der Mantelleitung in einer Querschnittsansicht der Mantelleitung angeordnet sind, die Drillrichtung in Richtung der Querschnittsansicht im Uhrzeigersinn verläuft. "In Richtung der Querschnittsansicht" bedeutet, dass die Drillrichtung ausgehend von der Querschnittsansicht in die Papierebene hinein in Längsrichtung der Mantelleitung 12 in die entsprechende Richtung verläuft.

Als Grundvoraussetzung für eine solche Bestimmung darf die von der Aufnahmevorrichtung erfasste Querschnittsansicht quer zur Längsrichtung der Mantelleitung keine (gedachte) Symmetrielinie bzw. in Längsrichtung der Mantelleitung verlaufende Symmetrieebene aufweisen. Symmetrielinie bzw. -ebene bedeutet hier bevorzugt, dass an dieser Linie/Ebene nicht nur Geometrien gespiegelt werden, sondern auch Materialien, Farben etc. Eine Symmetrielinie ist dann vorhanden, wenn mit der verwendeten Aufnahmevorrichtung 26 keinen Unterschied zwischen beiden Seiten der Symmetrielinie erfassbar ist. Nur wenn keine Symmetrie vorliegt, ist sichergestellt, dass nach dem Durchtrennen der Mantelleitung und Betrachten der so ausgebildeten Stirnfläche (Querschnittsansicht) mittels einer Aufnahmevorrichtung eindeutig eine Richtung der Mantelleitung und damit auch der Verlauf der Drillrichtung bestimmt werden kann.

Zur Unterscheidung der einzelnen Einzelleitungen 30, 31, 32 können beispielsweise die Farben der Isolierungen und/oder unterschiedliche Dicken der Einzelleitungen und/oder unterschiedliche Materialien der Einzelleitungen und/oder durch die Einzelleitungen in der Querschnittsansicht der Mantelleitung ausgebildete geometrische Figuren, d.h., die relative Anordnung der Einzelleitungen in der Mantelleitung herangezogen werden. Alternativ können andere Geometriemerkmale im Querschnitt, beispielsweise beilaufende Waren, spezielle Markierungen etc. verwendet werden. Beispielsweise muss in einer Querschnittsansicht der Mantelleitung eine Farbfolge der Isolierungen der Einzelleitungen und/oder eine Dickenfolge der Einzelleitungen im Uhrzeigersinn um die Längsachse der Mantelleitung unterschiedlich zu der einer Farbfolge der Isolierungen der Einzelleitungen und/oder einer Dickenfolge der Einzelleitungen entgegen dem Uhrzeigersinn um die Längsachse der Mantelleitung in derselben Querschnittsansicht sein.

In der weiteren bevorzugten Ausführungsform wird also in einem ersten Schritt die Mantelleitung 12 durchtrennt (siehe Fig. 1c)). Nach dem Durchtrennen wird mit der Aufnahmevorrichtung beispielsweise die Farbfolge der Einzelleitungen30, 31, 32 erfasst und ausgewertet. Die ausgewertete Farbfolge wird in dem Steuergerät 14 mit einer Referenzfarbfolge, die beispielsweise in dem Steuergerät 14 gespeichert ist, verglichen. In dem Steuergerät ist beispielsweise weiter hinterlegt, dass bei einer Übereinstimmung der Farbfolge mit der Referenzfarbfolge die Drillrichtung ausgehend von der Querschnittsansicht im Uhrzeigersinn und, wenn keine Übereinstimmung vorliegt, gegen den Uhrzeigersinn ist. Somit kann die Drillrichtung eindeutig bestimmt werden. Aus der somit bestimmten Drillrichtung und den bekannten Daten des Abstands s und der Schlaglänge S kann anschließend die genaue Anordnung der Einzelleitungen im Abstand s berechnet werden.

Die Schlaglänge S und/oder der Abstand s können manuell eingegeben/gespeichert sein und/oder aus der Markierung 34 ausgelesen werden.

Bezugszeichenliste

| | |
|---|---|
| 10 | Halterung |
| 12 | Mantelleitung |
| 14 | Steuergerät (Auswerteeinrichtung) |
| 16 | Eingänge |
| 18 | Ausgänge |
| 20 | Dreheinrichtung |
| 22 | optische Aufnahmeeinrichtung |
| 24 | Schneideinrichtung |
| 26 | Kamera |
| 28 | Abisoliereinrichtung |
| 30, 31, 32 | Einzelleitungen |
| 34 | Markierung |

**Patentansprüche**

1. Verfahren zum Ausrichten einer mehradrigen Mantelleitung (12), die innerhalb eines Mantels mehrere mit einer vorbestimmten Schlaglänge gegeneinander verdrillte Einzelleitungen (30, 31, 32) aufweist, derart, dass wenigstens eine Einzelleitung (30, 31, 32) an einer vorbestimmten Querschnittsstelle eine gewünschte Winkellage relativ zu einer in einer Ebene senkrecht zur Längserstreckung der Mantelleitung (12) durch die Mitte der Mantelleitung (12) verlaufenden Bezugsrichtung hat, mit folgenden Schritten

   - Festlegen der gewünschten Winkellage der wenigstens einen Einzelleitung (30, 31, 32) an der vorbestimmten Querschnittsstelle relativ zu der Bezugsrichtung,
   - Bestimmen des Abstandes zwischen einem Ende der Mantelleitung und der vorbestimmten Querschnittsstelle in Längsrichtung der Mantelleitung,

- Ermitteln einer Soll-Endwinkellage der wenigstens einen Einzelleitung (30, 31, 32) relativ zu der Bezugsrichtung an dem Ende der Mantelleitung (12) aus der gewünschten Winkellage der wenigstens einen Einzelleitung (30, 31, 32) an der vorbestimmten Querschnittsstelle, der Schlaglänge, der Drillrichtung und dem Abstand, und

- Drehen der Mantelleitung (12) um ihre Längsachse derart, dass die tatsächliche Endwinkellage der wenigstens einen Einzelleitung (30, 31, 32) mit der ermittelte Soll-Endwinkellage der wenigstens einen Einzelleitungen (30, 31, 32) übereinstimmt.

2. Verfahren zum Bestimmen einer Winkellage wenigstens einer Einzelleitungen an einer vorbestimmten Querschnittsstelle in einer mehradrigen Mantelleitung (12), die innerhalb eines Mantels mehrere mit einer vorbestimmten Schlaglänge gegeneinander verdrillte Einzelleitungen (30, 31, 32) aufweist, wobei die Winkellage der Einzelleitungen (30, 31, 32) relativ zu einer in einer Ebene senkrecht zur Längserstreckung der Mantelleitung (12) durch die Mitte der Mantelleitung (12) verlaufenden Bezugsrichtung bestimmt ist, mit folgenden Schritten

    - Bestimmen einer Endwinkellage von Enden der Einzelleitungen (30, 31, 32) relativ zu der Bezugsrichtung,
    - Bestimmen des Abstandes zwischen dem Ende der Mantelleitung und der vorbestimmten Querschnittsstelle in Längsrichtung der Mantelleitung,
    - Ermitteln der Winkellage der Einzelleitungen (30, 31, 32) relativ zu der Bezugsrichtung an der vorbestimmten Querschnittsstelle aus der Endwinkellage, der Schlaglänge, der Drillrichtung und dem Abstand.

3. Verfahren nach Anspruch 1 oder 2, bei dem einer Ausgestaltung einer Querschnittsansicht der Mantelleitung (12) eine Drillrichtung in Richtung der Querschnittsansicht zugeordnet ist, mit den folgenden weiteren Schritten Erfassen der Ausgestaltung der Querschnittsansicht und Bestimmen der Drillrichtung in Richtung der Querschnittsansicht aus der Ausgestaltung Querschnittsansicht.

4. Verfahren nach Anspruch 3, bei dem die Ausgestaltung der Querschnittsansicht durch eine relative Anordnung von Einzelleitungen (30, 31, 32) zueinander oder durch ein sich aus der Querschnittsansicht der Mantelleitung ergebendes Muster der Einzelleitungen (30, 31, 32) bestimmt wird, und

das Erfassen der Ausgestaltung das Erfassen der relativen Anordnung der Einzelleitungen (30, 31, 32) zueinander oder des sich ergebenden Musters der Einzelleitungen (30, 31, 32) beinhaltet und die Drillrichtung in Richtung der Querschnittsansicht aus der relativen Anordnung der Einzelleitungen (30, 31, 32) oder dem Muster bestimmt wird.

5. Verfahren nach Anspruch 4, bei dem die relative Anordnung oder das Muster aus Farben von Isolierungen der Einzelleitungen (30, 31, 32) und/oder unterschiedlichen Dicken und/oder unterschiedlichen Materialien der Einzelleitungen (30, 31, 32) bestimmt ist.

6. Verfahren nach einem der Ansprüche 1 bis 5, bei dem

in einer Querschnittsansicht der Mantelleitung eine Farbfolge der Isolierungen der Einzelleitungen (30, 31, 32) und/oder eine Dickenfolge der Einzelleitungen (30, 31, 32) und/oder eine Folge aus Materialien der Einzelleitungen (30, 31, 32) im Uhrzeigersinn um die Längsachse der Mantelleitung unterschiedlich zu der einer Farbfolge der Isolierungen der Einzelleitungen (30, 31, 32) und/oder einer Dickenfolge der Einzelleitungen (30, 31, 32) und/oder einer Folge aus Materialien der Einzelleitungen (30, 31, 32) entgegen dem Uhrzeigersinn um die Längsachse der Mantelleitung in derselben Querschnittsansicht ist, und

mindestens einer Farb- und/oder Dickenfolge und/oder Folge aus Materialien eine Drillrichtung in der Richtung der Querschnittsansicht zugeordnet ist,

mit den folgenden weiteren Schritten Erfassen der Farbfolge der Isolierungen der Einzelleitungen (30, 31, 32) und/oder der Dickenfolge der Einzelleitungen (30, 31, 32) und/oder der Folge aus Materalen und Bestimmen der Drillrichtung in Richtung der Querschnittsansicht aus der erfassten Farbfolge der Isolierungen der Einzelleitungen (30, 31, 32) und/oder der Dickenfolge der Einzelleitungen und/oder der Folge aus Materalen der Einzelleitungen.

7. Verfahren nach einem der Ansprüche 1 bis 6, wobei die Schlaglänge und/oder Drillrichtung durch elektronische Auswertung einer auf der Außenfläche der Mantelleitung (12) befindlichen Markierung (34) ermittelt wird.

8. Vorrichtung zum Durchführen des Verfahrens nach Anspruch 1, mit

    - einer Kamera (26) zur Erzeugung von Bilddaten einer Querschnittsansicht des Endes der Mantelleitung (12) mit darin sichtbarem Ende der wenigstens einen Einzelleitung (30, 31, 32),
- einer Auswerteeinrichtung (14) zur Bestimmung, ob die tatsächliche Endwinkellage der wenigstens einen Einzelleitung (30, 31, 32) relativ zu der durch die Mitte der Mantelleitung in der Querschnittsebene verlaufenden Bezugsrichtung (BZ) mit der Soll-Endwinkellage übereinstimmt, aus den Bilddaten, oder zur Bestimmung einer Endwinkellage wenigstens einer Einzelleitung relativ zu einer durch die Mitte der Mantelleitung in der Querschnittsebene verlaufenden Bezugsrichtung (BZ) aus den Bilddaten,
- einer Abstandsbestimmungseinrichtung zum Bestimmen des Abstandes (s) zwischen dem Ende der Mantelleitung (12) und der vorbestimmten Querschnittsstelle der Mantelleitung in Längsrichtung der Mantelleitung (12),
- einer Drilleingabeeinrichtung (22) zum Eingeben der Schlaglänge und der Drillrichtung,
- einer Recheneinrichtung (14), die die Soll-Endwinkellage der wenigstens einen Einzelleitung (30, 31, 32) relativ zu der Bezugsrichtung an dem Ende der Mantelleitung (12) aus der gewünschten Winkellage der wenigstens einen Einzelleitung (30, 31, 32) an der vorbestimmten Querschnittsstelle, dem Abstand (s), der Schlaglänge und der Drillrichtung bestimmt, und
- einer Dreheinrichtung (20) zum Drehen der Mantelleitung (12) um ihre Längsachse basierend auf der Bestimmung der Auswerteeinrichtung (14) derart, dass die tatsächliche Endwinkellage der wenigstens einen Einzelleitung (30, 31, 32) mit der ermittelten Soll-Endwinkellage der Einzelleitungen (30, 31, 32) übereinstimmt.

9. Vorrichtung zum Durchführen des Verfahrens nach Anspruch 2, mit

- einer Kamera (26) zur Erzeugung von Bilddaten einer Querschnittsansicht eines Endes der Mantelleitung (12) mit darin sichtbaren Enden der Einzelleitungen (30, 31, 32),
- einer Auswerteeinrichtung (14) zur Ermittlung einer Endwinkellage wenigstens einer Einzelleitung relativ zu einer durch die Mitte der Mantelleitung in der Querschnittsebene verlaufenden Bezugsrichtung (BZ) aus den Bilddaten,
- einer Abstandsbestimmungseinrichtung zum Bestimmen eines Abstandes (s) zwischen dem Ende der Mantelleitung und einer vorbestimmten Querschnittsstelle der Mantelleitung in Längsrichtung der Mantelleitung,
- einer Drilleingabeeinrichtung (22) zum Eingeben der Schlaglänge und der Drillrichtung und
- einer Recheneinrichtung (14), die die Winkellage der wenigstens einen Einzelleitung relativ zu der Bezugsrichtung (BZ) an der vorbestimmten Querschnittsstelle aus der Endwinkellage, dem Abstand (s), der Schlaglänge und der Drillrichtung bestimmt.

10. Vorrichtung nach Anspruch 8 oder 9, bei der einer Ausgestaltung einer Querschnittsansicht der Mantelleitung (12) eine Drillrichtung in Richtung der Querschnittsansicht zugeordnet ist, und die Drilleingabeeinrichtung eine Aufnahmeeinrichtung (26) zum Erfassen der Ausgestaltung der Querschnittsansicht und Bestimmen der Drillrichtung in Richtung der Querschnittsansicht aus der Ausgestaltung Querschnittsansicht aufweist.

11. Vorrichtung nach Anspruch 10, bei dem die Ausgestaltung der Querschnittsansicht durch eine relativen Anordnung von Einzelleitungen (30, 31, 32) zueinander oder durch ein sich aus der Querschnittsansicht der Mantelleitung ergebendes Muster der Einzelleitungen (30, 31, 32) bestimmt wird, und das Erfassen der Ausgestaltung das Erfassen der relativen Anordnung der Einzelleitungen (30, 31, 32) zueinander oder des sich ergebenden Musters der Einzelleitungen (30, 31, 32) beinhaltet und die Drillrichtung in Richtung der Querschnittsansicht aus der relativen Anordnung der Einzelleitungen (30, 31, 32) oder dem Muster bestimmt wird.

12. Vorrichtung nach Anspruch 11, bei dem die relative Anordnung oder das Muster aus Farben von Isolierungen der Einzelleitungen (30, 31, 32) und/oder unterschiedlichen Dicken und/oder unterschiedlichen Materialien von Einzelleitungen (30, 31, 32) bestimmt ist.

13. Vorrichtung nach einem der Ansprüche 8 bis 12, bei dem in einer Querschnittsansicht der Mantelleitung eine Farbfolge der Isolierungen der Einzelleitungen (30, 31, 32) und/oder eine Dickenfolge der Einzelleitungen (30, 31, 32) und/oder eine Folge aus Materialien der Einzelleitungen (30, 31, 32) im Uhrzeigersinn um die Längsachse der Mantelleitung unterschiedlich zu der einer Farbfolge der Isolierungen der Einzelleitungen (30, 31, 32) und/oder einer Dickenfolge der Einzelleitungen (30, 31, 32) und/oder einer Folge aus Materialien der Einzelleitungen (30, 31, 32) entgegen dem Uhrzeigersinn um die Längsachse der Mantelleitung in derselben Querschnittsansicht ist, und mindestens einer Farb- und/oder Dickenfolge und/oder Folge aus Materialien der Einzelleitungen (30, 31, 32) eine Drillrichtung in der Richtung der Querschnittsansicht zugeordnet ist, und die Drilleingabeeinrichtung eine Aufnahmeeinrichtung (22) zum Erfassen der Farbfolge der Isolierungen der Einzelleitungen (30, 31, 32) und/oder der Dickenfolge der Einzelleitungen (30, 31, 32) und/oder der Folge aus Materialien der Einzelleitungen (30, 31, 32) und Bestimmen der Drillrichtung in Richtung der Querschnittsansicht aus der Farbfolge der Isolierungen der Einzelleitungen (30, 31, 32) und/oder der Dickenfolge der Einzelleitungen (30, 31, 32) und/oder der Folge aus Materialien der Einzelleitungen (30, 31, 32) aufweist.

14. Vorrichtung nach einem der Ansprüche 8 bis 14, bei dem die Drilleingabeeinrichtung eine Aufnahmeeinrichtung (22) zum Erfassen einer auf der Außenfläche der Mantelleitung (12) befindlichen Markierung (34) enthält, und/oder die Abstandsbestimmungseinrichtung eine Wegmesseinrichtung enthält, mit der der Abstand (s) zwischen dem Ende der Mantelleitung und der vorbestimmten Stelle der Mantelleitung messbar ist.

15. System aus einer Vorrichtung nach einem der Ansprüche 8 bis 14 und einer mehradrigen Mantelleitung (12), die innerhalb eines Mantels mehrere mit einer vorbestimmten Schlaglänge gegeneinander verdrillte Einzelleitungen (30, 31, 32) aufweist, wobei die Winkellage der Einzelleitungen (30, 31, 32) relativ zu einer in einer Ebene senkrecht zur Längserstreckung der Mantelleitung (12) durch die Mitte der Mantelleitung (12) verlaufenden Bezugsrichtung bestimmt ist, bei dem die Querschnittsansicht der Mantelleitung (12) keine Symmetrielinie aufweist.

**Claims**

1. Method for aligning a multi-wire sheathed cable (12), which has, inside a sheath, a plurality of individual wires (30, 31, 32) twisted around one another with a predetermined lay length, such that, at a predetermined cross-sectional position, at least one individual wire (30, 31, 32) has a desired angle position relative to a reference direction (BZ), which extends through the center of the sheathed cable (12), in a plane perpendicular to the longitudinal extension of the sheathed cable (12), the method including the following steps:

- determining a desired angle position of the at least one individual wire (30, 31, 32) relative to the reference direction at the predetermined cross-sectional position,
- determining a distance between an end of the sheathed cable (12) and the predetermined cross-sectional position in the longitudinal direction of the sheathed cable (12),
- calculating a target end angle position of the at least one individual wire (30, 31, 32) relative to the reference direction at the end of the sheathed cable (12) based upon the desired angle position of the at least one individual wire (30, 31, 32) at the predetermined cross-sectional position, the lay length, the twist direction, and the distance, and
- rotating the sheathed cable (12) about its longitudinal axis such that the actual end angle position of the at least one individual wire (30, 31, 32) matches the calculated target end angle position of the at least one individual wire (30, 31, 32).

2. Method for determining an angular position of individual wires at a predetermined cross-sectional position in a multi-wire sheathed cable (12), which has, inside a sheath, a plurality of individual wires (30, 31, 32) twisted around one another with a predetermined lay length, wherein the angular position of the individual wires (30, 31, 32) is determined relative to a reference direction, which extends through the center of the sheathed cable (12), in a plane perpendicular to the longitudinal extension of the sheathed cable (12), the method including the following steps:

- determining an end angle position of ends of the individual wires (30, 31, 32) relative to the reference direction,
- determining a distance between the end of the sheathed cable (12) and the predetermined cross-sectional position in the longitudinal direction of the sheathed cable (12), and
- determining the angular position of the individual wires (30, 31, 32) relative to the reference direction at the predetermined cross-sectional position based upon the end angle position, the lay length, the twist direction, and the distance.

3. Method according to claim 1 or 2, wherein a twist direction in the direction of the cross-sectional view is associated with a configuration of a cross-sectional view of the sheathed cable (12), the method including the following further steps detecting the configuration of the cross-sectional view and determining the twist direction in the direction of the cross-sectional view from the configuration of the cross-sectional view.

4. Method according to claim 3, wherein the configuration of the cross-sectional view is determined by a relative arrangement of individual wires (30, 31, 32) with respect to one another or by a pattern of the individual wires (30, 31, 32) derived from the cross-sectional view of the sheathed cable, and the detecting of the configuration includes the detecting of the relative arrangement of the individual wires (30, 31, 32) with respect to one another or of the resulting pattern of the individual wires (30, 31, 32), and the twist direction in the direction of the cross-sectional view is determined from the relative arrangement of the individual wires (30, 31, 32) or from the pattern.

5. Method according to claim 4, wherein the relative arrangement or the pattern is determined from colors of insulations of the individual wires (30, 31, 32) and/or from different thicknesses and/or from different materials of the individual wires (30, 31, 32).

6. Method according to one of claims 1 to 5, wherein in a cross-sectional view of the sheathed cable, a color sequence of the insulations of the individual wires (30, 31, 32) and/or a thickness sequence of the individual wires (30, 31, 32) and/or a sequence of materials of the individual wires (30, 31, 32) in the clockwise direction about the longitudinal axis of the sheathed cable is different from the color sequence of the insulations of the individual wires (30, 31, 32) and/or the thickness sequence of the individual wires (30, 31, 32) and/or the sequence of materials of the individual wires (30, 31, 32) in the counterclockwise direction about the longitudinal axis of the sheathed cable in the same cross-sectional view, and a twist direction in the direction of the cross-sectional view is associated with at least one color-sequence and/or at least one thickness-sequence and/or at least one sequence of materials, the method including the following further steps detecting the color sequence of the insulation of the individual wires (30, 31, 32) and/or the thickness sequence of the individual wires (30, 31, 32) and/or the sequence of materials and determining the twist direction in the direction of the cross-sectional view from the detected color sequence of the insulation of the individual wires (30, 31, 32) and/or the thickness sequence of the individual wires and/or the sequence of materials of the individual wires.

7. Method according to one of claims 1 to 6, wherein the lay length and/or twist direction is determined by electronic evaluation of a marking (34) located on the outer surface of the sheathed cable (12).

8. Device for carrying out the method according to claim 1, including

   - a camera (26) for generating image data of a cross-sectional view of an end of the sheathed cable (12), in which cross-sectional view the end of the at least one individual wire (30, 31, 32) is visible,
   - an evaluation device (14) for determining from the image data whether an actual end angle position of the at least one individual wire relative to a reference direction (BZ) extending through the center of the sheathed cable in a cross-sectional plane matches the target end angle position or for determining from the image data an actual end angle position ($\alpha$) of at least one of the individual wires (30, 31, 32) in the cross-sectional view relative to a reference direction (BZ) that extends perpendicularly through a central longitudinal axis of the sheathed cable (12),
   - a distance determining device for determining a distance (s) between the end of the sheathed cable (12) and the predetermined cross-sectional position of the sheathed cable in the longitudinal direction of the sheathed cable (12),
   - a twist input device (22) for inputting the lay length and the twist direction,
   - a calculating device (14) that determines the target end angle position of the at least one individual wire (30, 31, 32) relative to the reference direction (BZ) at the end of the sheathed cable based upon the desired angle position of the at least one individual wire (30, 31, 32) at the predetermined cross-sectional position, the distance (s), the lay length, and the twist direction, and
   - a rotating device (20) for rotating the sheathed cable (12) about its longitudinal axis based upon the determination of the evaluation device (14) until the actual end angle position of the at least one individual wire (30, 31, 32) matches the calculated target end angle position of the at least one individual wire (30, 31, 32).

9. Device for carrying out the method according to claim 2, including

   - a camera (26) for generating image data of a cross-sectional view of an end of the sheathed cable (12), in which cross-sectional view ends of the individual wires (30, 31, 32) are visible,
   - an evaluation device (14) for determining from the image data an end angle position of at least one individual wire relative to a reference direction (BZ) extending through the center of the sheathed cable in a cross-sectional plane,
   - a distance determining device for determining a distance (s) between the end of the sheathed cable and a predetermined cross-sectional position of the sheathed cable in the longitudinal direction of the sheathed cable,
   - a twist input device (22) for inputting the lay length and the twist direction, and
   - a calculating device (14) that determines the angular position of the at least one individual wire relative to the reference direction (BZ) at the predetermined cross-sectional position based upon the end angle position, the distance (s), the lay length, and the twist direction.

10. Device according to claim 8 or 9, wherein

a twist direction in the direction of the cross-sectional view is associated with a configuration of a cross-sectional view of the sheathed cable (12), and the twist input device includes a recording device (22 or 26) for detecting the configuration of the cross-sectional view and for determining the twist direction in the direction of the cross-sectional view from the configuration of the cross-sectional view.

11. Device according to claim 10, wherein
the configuration of the cross-sectional view is determined from a relative arrangement of individual wires (30, 31, 32) with respect to one another or from a pattern of the individual wires (30, 31, 32) derived from the cross-sectional view of the sheathed cable, and
the detecting of the configuration includes the detecting of the relative arrangement of the individual wires (30, 31, 32) with respect to one another or of the resulting pattern of the individual wires (30, 31, 32), and the twist direction in the direction of the cross-sectional view is determined from the relative arrangement of the individual wires (30, 31, 32) or from the pattern.

12. Device according to claim 11, wherein
the relative arrangement or the pattern is determined from colors of insulations of the individual wires (30, 31, 32) and/or from different thicknesses and/or from different materials of the individual wires (30, 31, 32).

13. Device according to any one of claims 8 to 12, wherein
in a cross-sectional view of the sheathed cable, a color sequence of the insulations of the individual wires (30, 31, 32) and/or a thickness sequence of the individual wires (30, 31, 32) and or a sequence of materials of the individual wires (30, 31, 32) in the clockwise direction about the longitudinal axis of the sheathed cable is different from the color sequence of the insulations of the individual wires (30, 31, 32) and/or from the thickness sequence of the individual wires (30, 31, 32) and/or from the sequence of materials of the individual wires (30, 31, 32) in the counterclockwise direction about the longitudinal axis of the sheathed cable in the same cross-sectional view, and
a twist direction in the direction of the cross-sectional view is associated with at least one color sequence and/or at least one thickness sequence and/or at least one sequence of materials, and
the twist input device includes a recording device (22 or 26) for detecting the color sequence of the insulations of the individual wires (30, 31, 32) and/or the thickness sequence of the individual wires (30, 31, 32) and/or the sequence of materials of the individual wires (30, 31, 32) and for determining the twist direction in the direction of the cross-sectional view from the color sequence of the insulations of the individual wires (30, 31, 32) and/or from the thickness sequence of the individual wires and/or from the sequence of materials of the individual wires.

14. Device according to one of claims 8 to 14, wherein the twist input device includes a recording device (22) for detecting a marking (34) located on the outer surface of the sheathed cable (12) and/or the distance determining device includes a displacement measuring device, using which the distance (s) between the end of the sheathed cable and the predetermined position of the sheathed cable is measurable.

15. System comprising a device according to any one of claims 8 to 14 and a multi-wire sheathed cable, which has, inside a sheath, a plurality of individual wires (30, 31, 32) twisted around one another with a predetermined lay length, wherein the angular position of the individual wires (30, 31, 32) is determined relative to a reference direction, which extends through the center of the sheathed cable (12), in a plane perpendicular to the longitudinal extension of the sheathed cable (12), wherein
the sheathed cable (12) has no symmetry line in the cross-sectional view thereof.

**Revendications**

1. Procédé d'orientation d'un câble sous gaine à multiconducteurs (12) qui présente dans une gaine plusieurs câbles individuels (30, 31, 32) torsadés les uns contre les autres avec un pas de câblage prédéterminé de telle manière qu'au moins un câble individuel (30, 31, 32) présente sur un point de section transversale prédéterminé une position angulaire souhaitée par rapport à un sens de référence s'étendant dans un plan perpendiculairement à l'étendue longitudinale du câble sous gaine (12) au travers du milieu du câble sous gaine (12), avec les étapes suivantes :

- la détermination de la position angulaire souhaitée d'au moins un câble individuel (30, 31, 32) sur le point de section transversale prédéterminé par rapport au sens de référence,
- la détermination de la distance entre une extrémité du câble sous gaine et le point de section transversale prédéterminé dans le sens longitudinal du câble sous gaine,
- la détermination d'une position angulaire d'extrémité de consigne d'au moins un câble individuel (30, 31, 32) par rapport au sens de référence sur l'extrémité du câble sous gaine (12) à partir de la position angulaire souhaitée d'au moins un câble individuel (30, 31, 32) sur le point de section transversale prédéterminé, du pas de câblage, du sens de torsion et de la distance et

- la rotation du câble sous gaine (12) autour de son axe longitudinal de telle manière que la position angulaire d'extrémité réelle d'au moins un câble individuel (30, 31, 32) concorde avec la position angulaire d'extrémité de consigne déterminée d'au moins un câble individuel (30, 31, 32).

2. Procédé de détermination d'une position angulaire au moins d'un câble individuel sur un point de section transversale prédéterminé dans un câble sous gaine (12) à multiconducteurs qui présente dans une gaine plusieurs câbles individuels (30, 31, 32) torsadés les uns contre les autres avec un pas de câblage prédéterminé, la position angulaire des câbles individuels (30, 31, 32) étant déterminée par rapport à un sens de référence s'étendant dans un plan perpendiculairement à l'étendue longitudinale du câble sous gaine (12) au travers du milieu du câble sous gaine (12), avec les étapes suivantes :

- la détermination d'une position angulaire d'extrémité d'extrémités des câbles individuels (30, 31, 32) par rapport au sens de référence,
- la détermination de la distance entre l'extrémité du câble sous gaine et le point de section transversale prédéterminé dans le sens longitudinal du câble sous gaine,
- la détermination de la position angulaire des câbles individuels (30, 31, 32) par rapport au sens de référence sur le point de section transversale prédéterminé à partir de la position angulaire d'extrémité, du pas de câblage, du sens de torsion et de la distance.

3. Procédé selon la revendication 1 ou 2, pour lequel un sens de torsion en direction de la vue de section transversale est associé à une configuration d'une vue de section transversale du câble sous gaine (12),
avec les autres étapes suivantes :

la détection de la configuration de la vue de section transversale et la détermination du sens de torsion en direction de la vue de section transversale à partir de la configuration de la vue de section transversale.

4. Procédé selon la revendication 3, dans lequel la configuration de la vue de section transversale est déterminée par un agencement relatif de câbles individuels (30, 31, 32) les uns par rapport aux autres ou par un modèle produit à partir de la vue de section transversale du câble sous gaine des câbles individuels (30, 31, 32), et

la détection de la configuration contient la détection de l'agencement relatif des câbles individuels (30, 31, 32) les uns par rapport aux autres ou du modèle produit des câbles individuels (30, 31, 32) et le sens de torsion en direction de la vue de section transversale est déterminé à partir de l'agencement relatif des câbles individuels (30, 31, 32) ou du modèle.

5. Procédé selon la revendication 4, dans lequel l'agencement relatif ou le modèle est déterminé à partir de couleurs d'isolations des câbles individuels (30, 31, 32) et/ou de différentes épaisseurs et/ou de différents matériaux des câbles individuels (30, 31, 32).

6. Procédé selon l'une quelconque des revendications 1 à 5, dans lequel
dans une vue de section transversale du câble sous gaine, une suite de couleur des isolations des câbles individuels (30, 31, 32) et/ou une suite d'épaisseur des câbles individuels (30, 31, 32) et/ou une suite de matériaux des câbles individuels (30, 31, 32) dans le sens horaire autour de l'axe longitudinal du câble sous gaine est différente de l'une suite de couleur des isolations des câbles individuels (30, 31, 32) et/ou une suite d'épaisseur des câbles individuels (30, 31, 32) et/ou une suite de matériaux des câbles individuels (30, 31, 32) dans le sens inverse au sens horaire autour de l'axe longitudinal du câble sous gaine dans la même vue de section transversale, et à au moins une suite de couleur et/ou d'épaisseur et/ou une suite de matériaux étant associé un sens de torsion dans la direction de la vue de section transversale, avec les autres étapes suivantes :

la détection de la suite de couleur des isolations des câbles individuels (30, 31, 32) et/ou de la suite d'épaisseur des câbles individuels (30, 31, 32) et/ou de la suite de matériaux et la détermination du sens de torsion en direction de la vue de section transversale à partir de la suite de couleur détectée des isolations des câbles individuels (30, 31, 32) et/ou de la suite d'épaisseur des câbles individuels et/ou de la suite de matériaux des câbles individuels.

7. Procédé selon l'une quelconque des revendications 1 à 6, le pas de câblage et/ou le sens de torsion étant déterminé par l'évaluation électronique d'un marquage (34) se trouvant sur la surface extérieure du câble sous gaine (12).

8. Dispositif de réalisation du procédé selon la revendication 1, avec

- une caméra (26) pour la génération de données d'image d'une vue de section transversale de l'extrémité du câble sous gaine (12) avec une extrémité visible dedans de l'au moins un câble individuel (30, 31, 32),

- un dispositif d'évaluation (14) pour déterminer si la position angulaire d'extrémité réelle d'au moins un câble individuel (30, 31, 32) par rapport au sens de référence (BZ) s'étendant au travers du milieu du câble sous gaine dans le plan de section transversale concorde avec la position angulaire d'extrémité de consigne, à partir des données d'image ou pour déterminer une position angulaire d'extrémité au moins d'un câble individuel par rapport à un sens de référence (BZ) s'étendant au travers du milieu du câble sous gaine dans le plan de section transversale à partir des données d'image,

- un dispositif de détermination de distance pour la détermination de la distance (s) entre l'extrémité du câble sous gaine (12) et le point de section transversale prédéterminé du câble sous gaine dans le sens longitudinal du câble sous gaine (12),

- un dispositif de saisie de torsion (22) pour la saisie du pas de câblage et du sens de torsion,

- un dispositif de calcul (14) qui détermine la position angulaire d'extrémité de consigne d'au moins un câble individuel (30, 31, 32) par rapport au sens de référence sur l'extrémité du câble sous gaine (12) à partir de la position angulaire souhaitée d'au moins un câble individuel (30, 31, 32) sur le point de section transversale prédéterminé, de la distance (s), du pas de câblage et du sens de torsion, et

- un dispositif de rotation (20) pour la rotation du câble sous gaine (12) autour de son axe longitudinal en se basant sur la détermination du dispositif d'évaluation (14) de telle manière que la position angulaire d'extrémité réelle d'au moins un câble individuel (30, 31, 32) concorde avec la position angulaire d'extrémité de consigne déterminée des câbles individuels (30, 31, 32).

9. Dispositif de réalisation du procédé selon la revendication 2 avec

- une caméra (26) pour la génération de données d'image d'une vue de section transversale d'une extrémité du câble sous gaine (12) avec des extrémités visibles dedans des câbles individuels (30, 31, 32),

- un dispositif d'évaluation (14) pour déterminer une position angulaire d'extrémité d'au moins un câble individuel par rapport à un sens de référence (BZ) s'étendant au travers du milieu du câble sous gaine dans le plan de section transversale, à partir des données d'image,

- un dispositif de détermination de distance pour déterminer une distance (s) entre l'extrémité du câble sous gaine et un point de section transversale prédéterminé du câble sous gaine dans le sens longitudinal du câble sous gaine,

- un dispositif de saisie de torsion (22) pour la saisie du pas de câblage et du sens de torsion, et

- un dispositif de calcul (14) qui détermine la position angulaire d'au moins un câble individuel par rapport au sens de référence (BZ) sur le point de section transversale prédéterminé à partir de la position angulaire d'extrémité, de la distance (s), du pas de câblage et du sens de torsion.

10. Dispositif selon la revendication 8 ou 9, pour lequel un sens de torsion en direction de la vue de section transversale est associé à une configuration d'une vue de section transversale du câble sous gaine (12) et

le dispositif de saisie de torsion présente un dispositif de réception (26) pour la détection de la configuration de la vue de section transversale et la détermination du sens de torsion en direction de la vue de section transversale à partir de la configuration de la vue de section transversale.

11. Dispositif selon la revendication 10, pour lequel la configuration de la vue de section transversale est déterminée par un agencement relatif de câbles individuels (30, 31, 32) les uns par rapport aux autres ou par un modèle produit à partir de la vue de section transversale du câble sous gaine des câbles individuels (30, 31, 32) et

la détection de la configuration contient la détection de l'agencement relatif des câbles individuels (30, 31, 32) les uns par rapport aux autres ou du modèle produit des câbles individuels (30, 31, 32) et le sens de torsion en direction de la vue de section transversale est déterminé à partir de l'agencement relatif des câbles individuels (30, 31, 32) ou du modèle.

12. Dispositif selon la revendication 11, pour lequel l'agencement relatif ou le modèle est déterminé à partir de couleurs d'isolations des câbles individuels (30, 31, 32) et/ou de différentes épaisseurs et/ou de différents matériaux de câbles individuels (30, 31, 32).

13. Dispositif selon l'une quelconque des revendications 8 à 12, pour lequel
dans une vue de section transversale du câble sous gaine, une suite de couleur des isolations des câbles individuels (30, 31, 32) et/ou une suite d'épaisseur des câbles individuels (30, 31, 32) et/ou une suite de matériaux des câbles individuels (30, 31, 32) dans le sens horaire autour de l'axe longitudinal du câble sous gaine est différent de l'une suite de couleur des isolations des câbles individuels (30, 31, 32) et/ou une suite d'épaisseur des câbles individuels (30, 31, 32) et/ou une suite de matériaux des câbles individuels (30, 31, 32) dans le sens inverse au sens horaire autour de l'axe longitudinal du câble sous gaine dans la même vue de section transversale et

à au moins une suite de couleur et/ou d'épaisseur et/ou suite de matériaux des câbles individuels (30, 31, 32) est associé un sens de torsion dans la direction de la vue de section transversale et

le dispositif de saisie de torsion présente un dispositif de réception (22) pour la détection de la suite de couleur des isolations des câbles individuels (30, 31, 32) et/ou de la suite d'épaisseur des câbles individuels (30, 31, 32) et/ou de la suite de matériaux des câbles individuels (30, 31, 32) et la détermination du sens de torsion en direction de la vue de section transversale à partir de la suite de couleur des isolations des câbles individuels (30, 31, 32) et/ou de la suite d'épaisseur des câbles individuels (30, 31, 32) et/ou de la suite de matériaux des câbles individuels (30, 31, 32).

14. Dispositif selon l'une quelconque des revendications 8 à 14, pour lequel le dispositif de saisie de torsion contient un dispositif de réception (22) pour la détection d'un marquage (34) se trouvant sur la surface extérieure du câble sous gaine (12) et/ou le dispositif de détermination de distance contient un dispositif de mesure de déplacement, avec lequel la distance (s) est mesurable entre l'extrémité du câble sous gaine et le point prédéterminé du câble sous gaine.

15. Système composé d'un dispositif selon l'une quelconque des revendications 8 à 14 et d'un câble sous gaine (12) à multiconducteurs qui présente dans une gaine plusieurs câbles individuels (30, 31, 32) torsadés les uns contre les autres avec un pas de câblage prédéterminé, la position angulaire des câbles individuels (30, 31, 32) étant déterminée par rapport à un sens de référence s'étendant dans un plan perpendiculaire à l'étendue longitudinale du câble sous gaine (12) au travers du milieu du câble sous gaine (12), pour lequel

la vue de section transversale du câble sous gaine (12) ne présente aucune ligne de symétrie.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3144281 A1
- EP 0600415 B1
- EP 0368073 A2